(19) Europäisches Patentamt
European Patent Office
Office européen des brevets

(11) Publication number: **0 153 414**
**B1**

(12) **EUROPEAN PATENT SPECIFICATION**

(45) Date of publication of patent specification: **26.07.89**

(51) Int. Cl.$^4$: **G 02 B 6/02,** G 02 B 1/04

(21) Application number: **84903090.3**

(22) Date of filing: **17.08.84**

(86) International application number:
**PCT/JP84/00402**

(87) International publication number:
**WO 85/00897 28.02.85 Gazette 85/05**

(54) **OPTICAL TRANSMISSION FIBERS AND PROCESS FOR THEIR PRODUCTION.**

(30) Priority: **18.08.83 JP 150513/83**
**19.08.83 JP 151356/83**

(43) Date of publication of application:
**04.09.85 Bulletin 85/36**

(45) Publication of the grant of the patent:
**26.07.89 Bulletin 89/30**

(84) Designated Contracting States:
**DE FR GB NL**

(56) References cited:
**JP-A-49 123 340**
**JP-A-49 123 341**
**JP-A-54 150 139**
**JP-A-57 088 405**
**JP-A-57 102 604**

(73) Proprietor: **MITSUBISHI RAYON CO. LTD.**
**3-19, Kyobashi 2-chome Chuo-Ku**
**Tokyo 104 (JP)**

(72) Inventor: **YAMAMOTO, Takashi**
**216-35, Onocho Saeki-gun**
**Hiroshima 739-04 (JP)**
Inventor: **MURATA, Ryuji**
**26-29, Miyukicho**
**Otake-shi Hiroshima 739-06 (JP)**

(74) Representative: **Abitz, Walter, Dr.-Ing. et al**
**Abitz, Morf, Gritschneder, Freiherr von**
**Wittgenstein Postfach 86 01 09**
**D-8000 München 86 (DE)**

**EP 0 153 414 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for producing a light transmitting fiber having excellent flexibility and extremely excellent environmental resistance characteristics.

As to light transmitting fibers there have been previously known those of inorganic glass type having an excellent light transmission properties over a wide range of wavelengths. However, since these fibers are poor in processability, poorly resistant to bending stress and moreover expensive, light transmitting fibers based on synthetic resins have come to be developed. The light transmitting fibers made of synthetic resins can be obtained by preparing a fiber having a core-sheath structure which comprises a polymer with a high refractive index and a good light transmittance as the core and a transparent polymer with a lower refractive index than the former as the sheath. Preferred polymers useful as the core component having a good light transmittance are amorphous ones, and polymethyl methacrylate or polystyrene is generally used.

Among these core component polymers, polymethyl methacrylate is excellent in transparency as well as mechanical properties, thermal properties and weather resistance, and is used industrially as the core material of high performance plastic optical fibers.

However, even the plastic optical fibers using polymethyl methacrylate as the core are not satisfactory in flexibility. They become rigid and are easily broken when their diameter reaches 1 mm or more. Accordingly, they cannot exhibit a satisfactory performance in such uses wherein a large diameter is required as light guides which should transmit a large quantity of light. Thus, development of light transmitting fibers which are flexible with a large diameter is eagerly awaited.

Further, the plastic optical fibers using polymethyl methacrylate as the core are utterly unusable in an environmental temperature reaching 100°C or more since the glass transition temperature of polymethyl methacrylate is 100°C. Moreover, they are poor in resistance to chemicals and hot water. Consequently, the plastic optical fibers are limited in their field of applications.

Japanese Patent Application Kokai (Laid-open) No. 88,405/82 describes that a core-clad type optical fiber is prepared by filling a liquid silicone resin precursor into a pipe formed of polytrifluoroethyl methacrylate to form a parent material, then stretching the parent material while passing it through a heated heater, and effecting simultaneously the crosslinking of the silicone resin precursor. In this method, however, since the crosslinking of the core component is effected while the parent material of the optical fiber is being stretched and consequently uneven flow in the stretching of the core component as well as unhomogeneous curing of the core phase takes place, it is extremely difficult to obtain a core phase free from optical mottles, and hence optical fibers excellent in optical transmission characteristic cannot be obtained.

Japanese Patent Application Kokai (Laid-open) No. 102,604/82 describes a method for producing an optical fiber which comprises heating and softening a pipe formed of polymethyl methacrylate, filling thereinto a liquid silicone-rubber precursor while stretching the softened pipe, and effecting the crosslinking of the precursor. Also in the preparation according to said invention, since the crosslinking of the core component proceeds while the component is flowing, the difficulty of optical strain occurring in the core component phase cannot be avoided and it is extremely difficult to obtain optical fibers excellent in light transmitting characteristics.

The present invention provides a process for producing an all-plastic optical fiber which has overcome the defects of prior plastic optical fibers mentioned above, has an excellent flexibility and markedly improved environmental resistance characteristics including heat resistance, low-temperature resistance, resistance to vibration and resistance to radioactive rays.

Thus, the present invention consists of a process for producing a light transmitting fiber which comprises filling a liquid silicone having crosslinking property into a hollow sheath material formed of a substantially transparent organic polymer having a refractive index 0.01 or more lower than that of the crosslinked polysiloxane constituting the core component and then crosslinking the liquid silicone at static state to form the core component, wherein the polysiloxane has a hardness of at least 5, a tensile strength of at least $0{\cdot}49{\cdot}10^5$ Pa (0.5 $kg/cm^2$) and an elongation of at least 20%, and wherein the substantially transparent organic polymer is selected from the group consisting of fluorine-containing polymers containing 30% by weight or more of fluorine, blended products of said fluorine-containing polymer with polymethyl methacrylate, poly-4-methyl-1-pentene, and polymethyl methacrylate.

The attached drawing is a graph showing the light transmitting characteristic in visible to near infrared region of a light transmitting fiber using as the core component a polysiloxane obtained in one Example of the present invention.

The light transmitting fiber obtained by the process of the present invention uses polysiloxane as the core material. When used in light transmission media, those polysiloxanes are preferably selected which generate no or as little as possible volatile materials, solvents, and other side reaction products in the polymerization of polysiloxane. One reason for this is that many of the siloxane-type resins are observed to generate volatile materials, for example solvents and reaction products, and the light transmission medium containing these side reaction products shows an increased light scattering and resultantly an increased light transmission loss.

Accordingly, polysiloxanes which accompany little generation of volatile materials should be selected

to be used in this invention. Particularly for producing a low-loss light transmitting fiber, the polysiloxanes usable as the core component of the present invention are preferably those formed by curing with dimethylene units which generates no volatile materials such as solvents or side reaction products in curing.

The properties of polysiloxanes used as the core component of the light transmitting fiber of the present invention are such that the hardness is 5 or more, the tensile strength is $0{\cdot}49{\cdot}10^5$ Pa (0.5 kg/cm$^2$) or more and the elongation is 20% or more for ease of processing such as terminal treatment.

Hardness was determined by means of a spring-type hardness tester (type A) according to JIS K—6301—52. Tensile strength and elongation were determined according to JIS K—6301—3.

The polysiloxane having a crosslinked structure used in the present invention can be prepared by previously known methods, for example by the addition reaction of equation (1), namely dimethylene crosslinkage forming reaction, using vinylalkylsiloxane and a platinum catalyst described in Japanese Patent Publication Nos. 9969/58 and 26,771/63 or by the following reactions (2) to (8).

(1) $-\overset{|}{\underset{|}{Si}}-CH{=}CH_2 + H-\overset{|}{\underset{|}{Si}}- \rightarrow -\overset{|}{\underset{|}{Si}}-CH_2-CH_2-\overset{|}{\underset{|}{Si}}-$

(2) $-\overset{|}{\underset{|}{Si}}-H + HO-\overset{|}{\underset{|}{Si}}- \rightarrow -\overset{|}{\underset{|}{Si}}-O-\overset{|}{\underset{|}{Si}}- + H_2$

(3) $-\overset{|}{\underset{|}{Si}}-OH + CH_3CO-O-\overset{|}{\underset{|}{Si}}- \rightarrow -\overset{|}{\underset{|}{Si}}-O-\overset{|}{\underset{|}{Si}}- + CH_3COOH$

(4) $-\overset{|}{\underset{|}{Si}}-OH + (CH_3)_2N-\overset{|}{\underset{|}{Si}}- \rightarrow -\overset{|}{\underset{|}{Si}}-O-\overset{|}{\underset{|}{Si}}- + (CH_3)_2NH$

(5) $-\overset{|}{\underset{|}{Si}}-OH + R_2C = N-O\overset{|}{\underset{|}{Si}}- \rightarrow -\overset{|}{\underset{|}{Si}}-O-\overset{|}{\underset{|}{Si}}- + R_2C{=}N-OH$

R: Alkyl group having 1 to 5 carbon atoms

(6) $-\overset{|}{\underset{|}{Si}}-OH + RO-\overset{|}{\underset{|}{Si}}- \rightarrow -\overset{|}{\underset{|}{Si}}-O-Si- + ROH$

R: Alkyl group having 1 to 5 carbon atoms

(7) $-\overset{|}{\underset{|}{Si}}-CH = CH_2 + HS-\overset{|}{\underset{|}{Si}}- \rightarrow -\overset{|}{\underset{|}{Si}}-CH_2-CH_2-S-\overset{|}{\underset{|}{Si}}-$

(8) $-\overset{|}{\underset{|}{Si}}-CH = CH_2 + HSCH_2-CH_2-CH_2-\overset{|}{\underset{|}{Si}}- \cdot$

$\rightarrow -\overset{|}{\underset{|}{Si}}-CH_2-CH_2-S-CH_2-CH_2-CH_2-\overset{|}{\underset{|}{Si}}-$

The alkyl substituent of siloxane is generally a methyl, ethyl, or phenyl group or the like, but it is not limited thereto.

Further, two or more kinds of different substituents may be present together. The refractive index of polysiloxane can be controlled by the kinds of substituents. The refractive index of the polymer becomes higher with increasing content of phenyl groups, whereas it becomes lower with increasing content of methyl or ethyl groups. The refractive index of the polymer becomes still lower when fluoroalkyl groups such as trifluoropropyl groups are present.

These refractive indices are selected according to numerical aperture of the light transmitting fiber intended. Further, a third component may be used to improve adhesive property or toughness depending on purposes.

The platinum catalysts used as the catalyst of dimethylene crosslinkage forming reaction are

preferably soluble platinum compounds from the viewpoint of decreasing transmission loss. For example, chloroplatinic acid is preferred. Peroxides, light, γ-ray or Lewis acids may also be used as the catalyst as occasion demands.

The sheath component usable in the present invention is a substantially transparent organic polymer having a refractive index 0.01 or more lower than that of the core component polymer. For, when the difference of refractive indices is less than 0.01, the numerical aperture of the light transmitting fiber obtained is small and moreover the transmission loss of the fiber becomes very large; further, when the refractive index of the sheath component is higher than that of the core component, no light is transmitted at all.

The organic polymer of the sheath component is selected from the group consisting of fluorine-containing polymers containing 30% by weight or more of fluorine, blended products of said fluorine-containing polymer with polymethyl methacrylate, poly-4-methyl-1-pentene, and polymethyl methacrylate. It is preferably a thermoplastic organic polymer or an organic polymer having a crosslinked structure and a good flexibility. Examples of the thermoplastic organic polymers include polytetrafluoroethylene ($n_D$ 1.35), tetrafluoroethylene/perfluoroalkyl vinyl ether copolymers ($n_D$ 1.34 to 1.36), tetrafluoroethylene/hexafluoropropylene copolymer ($n_D$ 1.34), polychlorotrifluoroethylene ($n_D$ 1.425), tetrafluoroethylene/ethylene copolymer ($n_D$ 1.40), polyvinyl fluoride ($n_D$ 1.42), polyvinylidene fluoride ($n_D$ 1.47) and tetrafluoroethylene/vinylidene fluoride copolymer ($n_D$ 1.38 to 1.42). Further, there may be used polymers and copolymers of various fluoroalkyl methacrylates ($n_D$ 1.38 to 1.48), blended products ($n_D$ 1.43 to 1.48) of polyvinyl fluoride and polymethyl methacrylate and further, when the refractive index of core material is high, poly-4-methyl-1-pentene ($n_D$ 1.46) and polymethyl methacrylate ($n_D$ 1.49).

When an organic polymer having a crosslinked structure is used as the sheath component it gives a more excellent durability against heat than the above-mentioned thermoplastic polymer does since the molecules are crosslinked in a network structure.

By these combinations of core and sheath components, the thermal expansion coefficients of the core and the sheath of the optical transmission fiber obtained become approximately equal, and excellent transmission characteristics at high and extremely low temperatures can be obtained. Further, light transmitting fibers excellent in flexibility can be prepared.

There may also be used, as the sheath component, polymers having a low refractive index including fluorine containing elastomers such as vulcanized tetrafluoroethylene/hexafluoropropylene copolymer rubbers and fluorine containing epoxy resins.

The core part of the light transmitting fiber of this invention can have a diameter or more than 3000 μm because of its excellent flexibility, not to mention a diameter of 5 to 3000 μm, a range obtainable by prior optical transmission fibers. Thus, a very thick light piping as thick as about 50 mm can also be prepared.

The thickness of the sheath layer should be at least 1 μm for the purpose of total reflection of light. The upper limit of the thickness of the sheath layer can be properly selected according to intended uses.

Further, other kinds of polymers, for example tension members such as polyester fibers, polyamide fibers, metal fibers and carbon fibers, may be used together for reinforcing the light transmitting fiber of this invention to form an optical fiber cable.

Compared with a method for producing a light transmitting fiber which comprises extruding a precursor of core component polysiloxane and a sheath component polymer simultaneously in concentric circles of core-sheath and then thermosetting or one which comprises curing the polysiloxane of the core component formed into a fiber and then coating the sheath component polymer thereon, the process of the present invention which comprises filling a crosslinkable liquid silicone into a sheath material formed into a hollow body and then crosslinking the silicone in a static state to form the core component results in less unevenness of polymerization, formation of more uniform interface and a better roundness, and consequently enables to obtain a product of low optical transmission loss.

It is necessary for decreasing the transmission loss of optical transmission fibers to use a precursor which had been obtained by filtration, before forming, through a membrane filter having pore diameters of 0.05 to 10 μm, more preferably 0.05 to 1 μm, and in which almost no bright dot is observed when it is illuminated with visible laser beams. It is easy to decrease the transmission loss in visible rays of 600 to 700 nm to 1,000 dB/km or less by using the precursor thus obtained. It is further possible to decrease the transmission loss to 100 dB/km or less if contamination with dust and foreign substances is completely prevented.

In the method using a hollow sheath material, those sheath materials are preferably used whose inner wall is as smooth as possible and has a cross-section as near to a perfect circle as possible.

This invention will be illustrated in more detail below with reference to Examples. In each of the Examples, Me represents a methyl group, Ph a phenyl group and Vi a vinyl group.

All "parts" and "%" in the Examples stand for parts by weight and % by weight. All values of viscosities were determined at 25°C.

Example 1

A mixture of 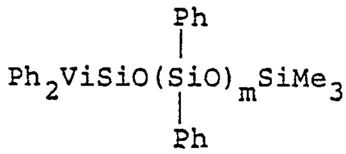 and 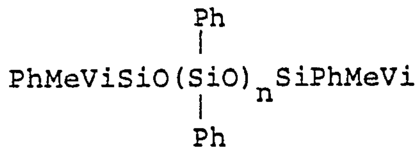 having a viscosity of 700 cSt (1cSt=1mm²/s) was filtered through a polytetrafluoroethylene filter having a pore diameter of 0.1 µm. Then, 95.0 parts of the filtered product was mixed with 5.0 parts of $PhSi{+}OSiPh_2H)_3$ and 5/1,000,000 part of chloroplatinic acid dissolved in 2-ethylhexanol, which had been respectively filtered through a polytetrafluoroethylene filter having a pore diameter of 0.1 µm, in a clean room and defoamed to prepare a precursor for core component.

Polysiloxane obtained by heating the precursor at 150°C for 2 hours showed following physical properties:

refractive index $n_D$ 1.51; hardness 2.0; tensile strength $1.96 \cdot 10^5$ Pa (2 kg/cm²); elongation 60%.

In the meantime, an 85/15 copolymer ($n_D$ 1.34) of tetrafluoroethylene/hexafluoropropylene was melt-extruded through a blow molding die at 325°C to obtain a hollow fiber having an inside diameter of 1.2 mm and an outside diameter of 2.0 mm.

The hollow fiber was cut to a length of 100 m. One end of the cut fiber was connected to a vacuum pump. From the other end, the above-mentioned precursor for core component was forced into the fiber under an absolute pressure of $4.9 \cdot 10^5$ Pa (5 kg/cm²G). After completion of the injunction of the core material the whole was heated at 150°C for 1 hour to complete polymerization. Thus, a light transmitting fiber was obtained.

The transmission loss of the light transmitting fiber had a wave-length dependency as shown in the attached drawing and showed an excellent value of 250 dB/km at 660 nm.

The light transmitting fiber showed no breakage even when wound 10 turns around a slender mandrel 5 mm in diameter. When unwound from the mandrel, it recovered the original shape and the transmission loss was 250 dB/km, showing no change at all from the original value.

Further, the light transmitting fiber showed no transmission loss at all even after heated at 180°C for 200 hours or cooled at −40°C for 200 hours.

Examples 2 to 5

Light transmitting fibers were obtained in the same manner as in Example 1 except for changing the hollow fiber of sheath material into those shown in Table 1.

The results obtained are shown together in Table 1.

Table 1

| Example | Sheath material polymer | $n_D$ | Inside diameter (mm) | Outside diameter (mm) | Transmission loss (dB/km) (660 nm) |
|---|---|---|---|---|---|
| 2 | Tetrafluoroethylene/hexafluoropropylene copolymer | 1.34 | 0.5 | 1.0 | 320 |
| 3 | Tetrafluoroethylene/ethylene copolymer | 1.40 | 1.2 | 2.0 | 310 |
| 4 | Polytetrafluoroethylene | 1.35 | 1.5 | 2.5 | 450 |
| 5 | Poly-4-methylpentene-1 | 1.46 | 0.5 | 1.0 | 265 |

Example 6

A light transmitting fiber was obtained in the same manner as in Example 1 except that a mixture comprising component (1) having a structure of

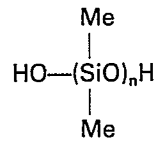

and a viscosity of $15 \times 10^{-4}$ $m^2/s$ (1500 cSt), component (2) having a structure of $PhSi(OC_2H_5)_3$ and dibutylamine as catalyst was used as the precursor for core component.

Polysiloxane obtained by heating the above-mentioned precursor for core component at 150°C for 2 hours showed following physical properties:

refractive index $n_D$ 1.42; hardness 30; tensile strength 3.92·105 Pa (4 $kg/cm^2$); elongation 220%.

Though the light transmitting fiber this obtained showed a somewhat large transmission loss of 2000 dB/km at 660 nm, a light of a flashlamp was sufficiently sensible to the eye through a length of 5 m of the fiber.

The core component have no dimethylene cross-linkage unit.

Example 7

With 95.0 parts of a mixture comprising 65% of component (1) represented by $Me_2ViSiO(SiMe_2O)_nSiViMe_2$ and 35% of component (2), a copolymer of $SiO_2$, $Me_3SiO_{0.5}$ and $Me_2ViSiO_{0.5}$, were mixed in a clean room 5 parts of component (3) of the formula $MeSi(OSiMe_2H)_3$ and 5/1,000,000 part of chloroplatinic acid dissolved in 2-ethylhexanol and the whole was defoamed to prepare a precursor for sheath component ($n_D$ 1.41).

The precursor for sheath component prepared in the above manner was formed with heating into a tube having an inside diameter of 5 mm and an outside diameter of 9 mm. Into the said sheath material tube was sucked the precursor for core component prepared in Example 1 by means of vacuum and the whole was then heated at 150°C for 1 hour to obtain a super-thick light transmitting fiber.

The light transmitting fiber obtained above showed a transmission loss of 275 dB at 660 nm. It was very flexible despite its large thickness and permitted sufficient transmission of light even when wound round a mandrel of 20 mm in diameter.

Comparative Example 1

A commercially available plastic optical fiber (diameter: 1.0 mm; transmission loss: 350 dB/km as determined by light of a wave length of 650 nm) using polymethyl methacrylate as the core was heated at 120°C for 1 hour. The transmission loss increased up to 9500 dB/km and the fiber diameter changed into 1.2 to 1.4 mm.

Comparative Example 2

A commercially available plastic optical fiber (diameter: 3 mm) using polymethyl methacrylate as the core was easily broken when it was wound round a mandrel of 20 mm diameter.

Comparative Example 3

A liquid silicone resin precursor (the same as that used in Example 1) was filled into a pipe formed of polytrifluoroethyl methacrylate having an inside diameter of 15 mm and an outside diameter of 22 mm and closed at one end to form a parent material. The parent material was inserted into a cylindrical heater heated to about 300°C, spun into a fiber and taken up at a speed of 1 m/minute to prepare a light transmitting fiber. The light transmitting fiber obtained had a core diameter of 1.5 mm and an outside diameter of 2.2 mm. The transmission loss of the light transmitting fiber was 4800 dB/km at 660 nm, a markedly large loss as compared with that in Example 1.

When the light transmitting fiber was wound round a mandrel of 20 cm diameter the sheath material was broken because of poor elasticity.

Example 8

Comparative tests of environmental resistances were carried out by using the light transmitting fiber obtained in Example 1 and the commercially available plastic optical fiber used in Comparative Example 1 on the following items according to the standards on low-voltage electric wires for automobiles (JIS C 3406—1978) of Japanese Industrial Standards.

| | Test method | Fiber of this invention | Commercial fiber |
|---|---|---|---|
| Oil resistance | see JIS C 3406, Immersion in oil at 50°C for 20 hours | No increase in transmission loss | Increase in transmission loss: 20 dB/km |
| Thermal resistance | see JIS C 3406, Heating at 120°C for 120 hours | No increase in transmission loss | No light is transmitted at all. |
| Low-temperature resistance | see JIS C 3406, Cooling at -40°C for 3 hours | No increase in transmission loss | No increase in transmission loss |
| Flame resistance | see JIS C 3005-2 | Flame is extinguished spontaneously within 5 seconds of burning. | Flame is not extinguished. |
| Hot-water resistance | In hot water at 100°C for 5 hours | Increase in transmission loss: 10 dB/km | No light is transmitted at all. |
| Vibration durability | see JIS D 1601, Vibration frequency 2000 c/min., 8 hours | No increase in transmission loss | No increase in transmission loss |

The light transmitting fiber obtained according to the present invention is a light transmitting fiber of high performance and high reliability having flexibility, thermal durability, low-temperature durability, chemical resistance and vibration resistance which are beyond the category of those of prior plastic optical fibers. It is a light transmitting fiber which enables optical communications through several hundred meters even under extremely severe environment. Thus, this invention is of great significance.

The light transmitting fiber of the present invention is suitable for optical control in body parts used in severe environmental conditions in mobile objects, particularly engine rooms thereof, including automobiles, ships and aeroplanes.

## Claims

1. A process for producing a light transmitting fiber which comprises filling a liquid silicone having crosslinking property into a hollow sheath material formed of a substantially transparent organic polymer having a refractive index 0.01 or more lower than that of the crosslinked polysiloxane constituting the core component and then crosslinking the liquid silicone at static state to form the core component, wherein the polysiloxane has a hardness of at least 5, a tensile strength of at least $0.49 \cdot 10^5$ Pa (0.5 kg/cm$^2$) and an elongation of at least 20%, and wherein the substantially transparent organic polymer is selected from the group consisting of fluorine-containing polymers containing 30% by weight or more of fluorine, blended products of said fluorine-containing polymer with polymethyl methacrylate, poly-4-methyl-1-pentene, and polymethyl methacrylate.

2. A process according to Claim 1 wherein the sheath component is a thermoplastic organic polymer.

3. A process according to Claim 1 wherein the sheath component is a crosslinked organic polymer of good flexibility.

4. A process according to Claim 1 wherein the polysiloxane of the core component is one crosslinked with dimethylene units.

## Patentansprüche

1. Verfahren zur Herstellung einer Lichtleitfaser, umfassend das Einfüllen eines flüssigen Silikons mit Vernetzungseigenschaft in ein hohles Hüllenmaterial, gebildet aus einem im wesentlichen transparenten organischen Polymeren, das einen Brechungsindex hat, der um 0,01 oder mehr niedriger ist als der des vernetzten Polysiloxans, das die Kernkomponente bildet, und anschließende Vernetzung des flüssigen Silikons im statischen Zustand zur Bildung der Kernkomponente, wobei das Polysiloxan eine Härte von mindestens 5, eine Zugfestigkeit von mindestens $0{,}49 \times 10^5$ Pa (0,5 kg/cm$^2$) und eine Dehnung von mindestens 20% hat, und wobei das im wesentlichen transparente organische Polymere ausgewählt ist aus der Gruppe bestehend aus fluorhaltigen Polymeren, die 30 Gew.-% oder mehr an Fluor enthalten, gemischten Produkten des genannten fluorhaltigen Polymeren mit Polymethylmethacrylat, Poly-4-methyl-1-penten und Polymethylmethacrylat.

2. Verfahren nach Anspruch 1, worin die Hüllenkomponente ein thermoplastisches organisches Polymeres ist.

3. Verfahren nach Anspruch 1, worin die Hüllenkomponente ein vernetztes organisches Polymeres mit guter Flexibilität ist.

4. Verfahren nach Anspruch 1, worin das Polysiloxan der Kernkomponente ein solches ist, das mit Dimethyleneinheiten vernetzt ist.

## Revendications

1. Un procédé de réalisation d'une fibre transmettant la lumière qui comprend les opérations consistant à verser une silicone liquide réticulable dans un matériau de gaine creux formé d'un polymère organique sensiblement transparent ayant un indice de réfraction inférieur de 0,01 ou plus à celui du polysiloxane réticulé formant le constituant de coeur, puis à réticuler la silicone liquide à l'état statique pour former le constituant de coeur, le polysiloxane ayant une dureté d'au moins 5, une résistance à la traction d'au moins $0{,}49 \times 10^5$ Pa (0,5 kg/cm$^2$) et un allongement d'au moins 20%, et le polymère organique sensiblement transparent étant choisi dans le groupe formé par les polymères fluorés contenant au moins 30% en poids de fluor, les produits de mélange desdits polymères fluorés avec le poly(méthacrylate de méthyle), le poly(4-méthyl-1-pentène) er le poly(méthacrylate de méthyle).

2. Un procédé selon la revendication 1 dans lequel le constituant de gaine est un polymère organique thermoplastique.

3. Un procédé selon la revendication 1 dans lequel le constituant de gaine est un polymère organique réticulé d'une bonne flexibilité.

4. Un procédé selon la revendication 1 dans lequel le polysiloxane du constituant de coeur est un polysiloxane réticulé avec des motifs diméthylène.

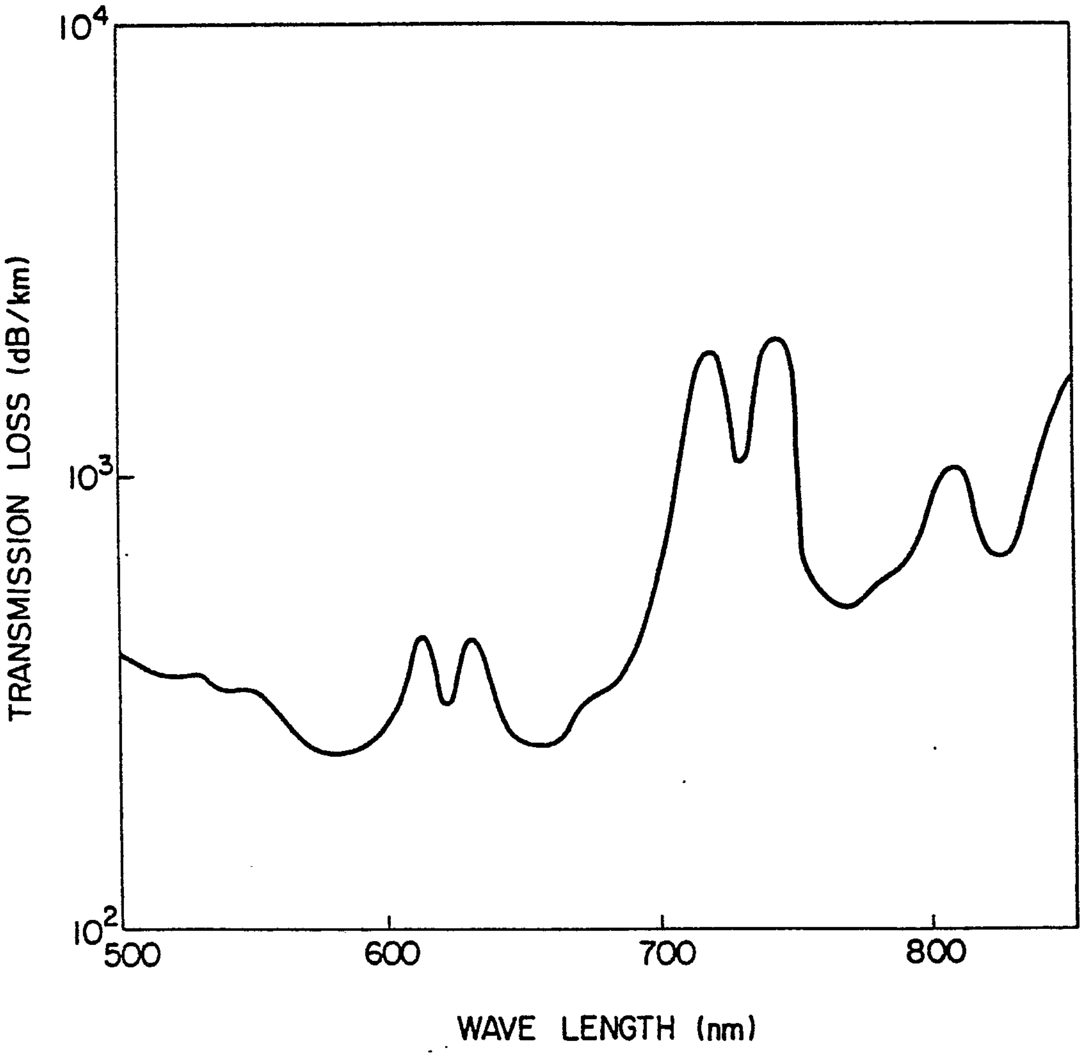
10^4
10^3
10^2
TRANSMISSION LOSS (dB/km)
500
600
700
800
WAVE LENGTH (nm)